# FASCICULE DE BREVET EUROPEEN

(11) **EP 3 598 305 B1**
(45) Date de publication et mention de la délivrance du brevet: **04.08.2021**
(21) Numéro de dépôt: 19183376.3
(22) Date de dépôt: 28.06.2019
(51) Int. Cl.: G06F 11/14

(54) **PROCEDE DE GESTION D'UN SYSTEME DE PILOTAGE AUTOMATIQUE EQUIPANT UN AERONEF**
VERWALTUNGSVERFAHREN EINES AUTOMATISCHEN STEUERUNGSSYSTEMS AN BORD EINES LUFTFAHRZEUGS
METHOD FOR MANAGING AN AUTOMATIC CONTROL SYSTEM EQUIPPING AN AIRCRAFT

(30) Priorité: 16.07.2018 FR 1800752
(43) Date de publication de la demande: 22.01.2020
(73) Titulaire: Airbus Helicopters, 13725 Marignane Cedex (FR)
(72) Inventeur: ABDELLI, Kamel, 13011 MARSEILLE (FR)
(74) Mandataire: GPI & Associés

(56) Documents cités:
- EP-A1- 3 023 304
- EP-A1- 3 043 264
- WO-A1-2009/108978
- DE-A1-102007 056 218
- SIMON D ET AL: "A software fault tolerance experiment for space applications", INTERNATIONAL SYMPOSIUM ON FAULT TOLERANT COMPUTING. (FTCS). NEWCASTLE UPON TYNE, JUNE 26 - 28, 1990; [INTERNATIONAL SYMPOSIUM ON FAULT TOLERANT COMPUTING SYSTEMS. (FTCS)], LOS ALAMITOS, IEEE COMP. SOC. PRESS, US, 26 juin 1990 (1990-06-26), pages 28-35, XP032360322, DOI: 10.1109/FTCS.1990.89363 ISBN: 978-0-8186-2051-5
- HILLER: "Software Fault Tolerance Techniques from a Real-Time Systems Point of View", TECHNICAL REPORT DEPARTMENT OF COMPUTER ENGINEERING CHALMERSUNIVERSITY OF TECHNOLOGY GOTEBORG, XX, XX, no. 98-16, 1 novembre 1998 (1998-11-01), page complete, XP002213417,

## Description

La présente invention se rapporte à un procédé de gestion d'un système de pilotage automatique équipant un aéronef.

Plus particulièrement, l'invention concerne les procédés de gestion permettant de détecter des erreurs exceptionnelles impactant des opérations de calcul dans des programmes informatiques permettant en sortie de générer les consignes de commande de pilotage de l'aéronef.

De telles erreurs exceptionnelles peuvent alors consister en des erreurs logicielles et sont alors généralement désignées par le terme anglais de « bug ».

En outre, de telles erreurs exceptionnelles peuvent également être dues à un champ magnétique extérieur, à des ondes électromagnétiques ou à des particules ionisantes venant perturber le fonctionnement d'un organe électronique tel un microprocesseur, une mémoire de type semi-conducteur ou encore des transistors de puissance. Ces erreurs exceptionnelles sont quant à elles généralement désignées par l'expression en langue anglaise « single event upset » ou par son acronyme anglais « SEU ».

Généralement pour traiter ces erreurs de type SEU, il a été développé des procédés de comparaison entre deux systèmes redondants tel que notamment décrit dans le document EP 1 785 799. La comparaison entre les sorties des deux systèmes redondants permet d'identifier l'occurrence d'une erreur dans une succession d'étapes d'un programme et la redondance des systèmes permet de rendre inopérant le calculateur ayant généré cette erreur.

Cependant dans ce cas, le calculateur incriminé est alors complètement désactivé et/ou arrêté et ne remplit plus aucune autre fonction, et ce potentiellement au détriment d'un service contribuant à la sécurité du vol. Le pilote de l'aéronef est alors alerté d'une panne sur l'un de ses calculateurs permettant de réaliser notamment la fonction de pilotage automatique.

D'autres procédés de commande reflétant l'arrière plan technologique ont également été décrits dans les documents EP 3 043 264, EP 3 023 304, DE 10 2007 056 218, WO 2009/108978 et dans les publications « A software fault tolerance experiment for space applications » de Simon D. et al publiée 26 juin 1990 et « Software fault tolerance techniques from a real-time systems point of view » de Hiller publiée le 1er novembre 1998.

En outre, le document EP 3 043 264 décrit un système de commande pour aéronef et en particulier pour drone. Il décrit également un processus gardien apte à détecter qu'un processus applicatif ne communique plus avec le processus gardien. Un tel processus applicatif se rapporte à l'utilisation d'un module périphérique comprenant un capteur dédié par exemple d'altitude ou de position de l'aéronef.

Le document EP 3 043 264 divulgue donc un système de commande embarqué sur un aéronef apte à surveiller les données générées uniquement en entrée d'un calculateur de commande par les modules périphériques et à identifier des erreurs dans ces données. Un tel système n'est donc pas adapté pour gérer au moins une erreur dans au moins une succession d'étapes permettant de générer au moins une consigne de pilotage automatique de l'aéronef.

En outre dans EP 3 043 264, après plusieurs relances d'un processus applicatif, si celui-ci ne fonctionne pas correctement, le processus gardien peut décider de fonctionner sans ce processus.

Un tel processus gardien ne peut donc agir en sortie du calculateur sur une succession d'étapes permettant de générer au moins une consigne de pilotage automatique de l'aéronef.

La présente invention a alors pour objet de proposer un procédé permettant de s'affranchir des limitations mentionnées ci-dessus. Le procédé conforme à l'invention permet en effet d'éviter de rendre inopérant un calculateur permettant de gérer le pilotage automatique d'un aéronef. Par suite un tel procédé permet d'éviter le recours à un système redondant de calculateurs pour pouvoir répondre à des erreurs logicielles ou exceptionnelles de type SEU quand la redondance n'est pas requise pour d'autres aspects.

L'invention se rapporte donc à un procédé de gestion d'un système de pilotage automatique équipant un aéronef, le système de pilotage automatique comportant au moins un calculateur permettant de mettre en œuvre une pluralité de succession d'étapes générant différentes consignes de pilotage automatique de l'aéronef, le procédé de gestion étant adapté pour gérer au moins une erreur dans au moins une succession d'étapes permettant de générer au moins une consigne de pilotage automatique de l'aéronef.

Selon l'invention, un tel procédé est remarquable en ce qu'il comporte au moins :
- une étape d'identification permettant d'identifier la (ou les) erreur(s) dans la (ou les) succession(s) d'étapes mises en œuvre par le (ou les) calculateur(s), la (ou les) erreur(s) étant une (ou des) erreur(s) exceptionnelle(s) de type SEU due à un champ magnétique extérieur, à des ondes électromagnétiques ou à des particules ionisantes venant perturber le fonctionnement du (ou des) calculateurs, l'étape d'identification permettant d'identifier au moins une occurrence de la (ou des) erreur(s) sur une plage de temps prédéterminée d'utilisation de l'aéronef,
- une étape de calcul pour déterminer un nombre total d'occurrences de la (ou des) erreur(s) sur la plage de temps prédéterminée d'utilisation de l'aéronef,
- une étape d'arrêt permettant d'arrêter la (ou les) succession(s) d'étapes sur un premier cycle d'étapes considéré comme défaillant lorsque le nombre total d'occurrences de la (ou des) erreur(s) est supérieur ou égal à une valeur de seuil prédéterminée,
- une étape de réinitialisation pour réinitialiser la (ou les) succession(s) d'étapes,
- une étape de relance permettant de relancer la (ou les) succession(s) d'étapes à partir d'un deuxième cycle d'étapes considéré comme sain, le deuxième cycle d'étapes étant distinct du premier cycle d'étapes,
- une première étape de sanction pour inhiber un appel d'au moins une première succession d'étapes de l'un au moins des premier et deuxième cycles d'étapes lorsque le nombre total d'occurrences de la (ou des) erreur(s) est supérieur ou égal au chiffre 1, et
- une deuxième étape de sanction distincte de la première étape de sanction, la deuxième étape de sanction permettant d'inhiber un appel d'au moins une deuxième succession d'étapes de l'un au moins des premier et deuxième cycles d'étapes lorsque le nombre total d'occurrences de la (ou des) erreur(s) est supérieur ou égal au chiffre 2, la (ou les) deuxième(s) succession(s) d'étapes étant distincte(s) de la (ou des) première(s) succession(s) d'étapes.

Autrement dit, un tel procédé permet d'empêcher le déroulement de la (ou des) succession(s) d'étapes impactées par la (ou les) erreurs. Par suite les sorties physiques du (ou des) calculateur(s) sont alors mises en sécurité temporairement. De cette manière, le(s) calculateur(s) reste(nt) actif(s) mais ne génère(nt) aucune information aberrante.

Par ailleurs, l'arrêt puis la reprise de la (ou des) succession(s) d'étapes au deuxième cycle d'étapes permet au procédé de mettre en œuvre graduellement des corrections ou sanctions logicielles en maintenant un niveau de sécurité optimal pour l'aéronef.

Avantageusement, la valeur de seuil prédéterminée peut être choisie supérieure ou égale au chiffre 1.

En d'autres termes, dès la première occurrence de la (ou des) erreur(s) sur la plage de temps prédéterminée d'utilisation de l'aéronef, le procédé permet d'arrêter, la (ou les) succession(s) d'étapes sur un premier cycle d'étapes considéré comme défaillant, de réinitialiser la (ou les) succession(s) d'étapes et de relancer la (ou les) succession(s) d'étapes à partir d'un deuxième cycle d'étapes considéré comme sain.

Avantageusement, une première étape de sanction peut consister en des sanctions logicielles partielles et ciblées afin que les fonctions principales de sécurité ne soient pas remise en question, en inhibant cette première succession d'étapes. La première étape de sanction peut par exemple provoquer une perte d'au moins une fonction dite « active » pour laquelle, une défaillance non détectée, peut être critique pour la sécurité de l'aéronef. Des fonctions passives opérées par le calculateur mettant en œuvre les différentes successions d'étapes peuvent quant à elles être maintenues pour assurer une mise en sécurité du vol de l'aéronef.

Une deuxième étape de sanction peut quant à elle consister en d'autres sanctions logicielles visant à réinitialiser la (ou les) succession(s) d'étapes dans un mode simplifié ou allégé pour que cette (ou ces) succession(s) d'étapes n'effectue(nt) aucun calcul. De cette manière, les sorties du calculateur peuvent être mises à des valeurs de sécurité parfois distinctes de valeurs par défaut mises en œuvre lorsque le calculateur est dans un mode de dégradation matériel également désigné par l'expression "mode HALT".

Ainsi, dès la deuxième ou troisième occurrence de la (ou des) erreur(s) sur la plage de temps prédéterminée d'utilisation de l'aéronef, le procédé permet de mettre en œuvre la deuxième étape de sanction précitée.

En pratique, le procédé peut comporter une troisième étape de sanction distincte des première et deuxième étapes de sanction, la troisième étape de sanction permettant d'inhiber un appel d'au moins une routine élémentaire d'au moins une troisième succession d'étapes permettant de générer au moins une consigne de pilotage automatique de l'aéronef. Cette troisième étape de sanction permet ainsi de supprimer une partie conséquente des d'étapes d'un programme d'ordinateur formé par la (ou les) troisième(s) succession(s) d'étapes afin de sécuriser le système de pilotage automatique.

Une telle troisième étape de sanction peut également consister en d'autres sanctions logicielles visant à réinitialiser la (ou les) succession(s) d'étapes dans un mode simplifié ou allégé pour que cette (ou ces) succession(s) d'étapes n'effectue(nt) aucun calcul.

Selon un exemple de réalisation avantageux de l'invention, la troisième étape de sanction peut s'opérer lorsque le nombre total d'occurrences de la (ou des) erreur(s) est supérieur ou égal au chiffre 2 et préférentiellement lorsque le nombre total d'occurrences est égal au chiffre 3.

Ainsi comme précédemment, dès la deuxième ou troisième occurrence de la (ou des) erreur(s) sur la plage de temps prédéterminée d'utilisation de l'aéronef, le procédé permet de mettre en œuvre la troisième étape de sanction précitée.

L'invention et ses avantages apparaîtront avec plus de détails dans le cadre de la description qui suit avec des exemples donnés à titre illustratif en référence aux figures annexées qui représentent :
- la figure 1, une vue de côté d'un aéronef dans lequel est mis en œuvre un procédé de gestion conforme à l'invention,
- la figure 2, un premier logigramme illustrant une première variante de procédé de gestion qui ne fait pas partie de l'invention,
- la figure 3, un deuxième logigramme illustrant une deuxième variante de procédé de gestion conforme à l'invention, et
- la figure 4, un troisième logigramme illustrant une troisième variante de procédé de gestion conforme à l'invention.

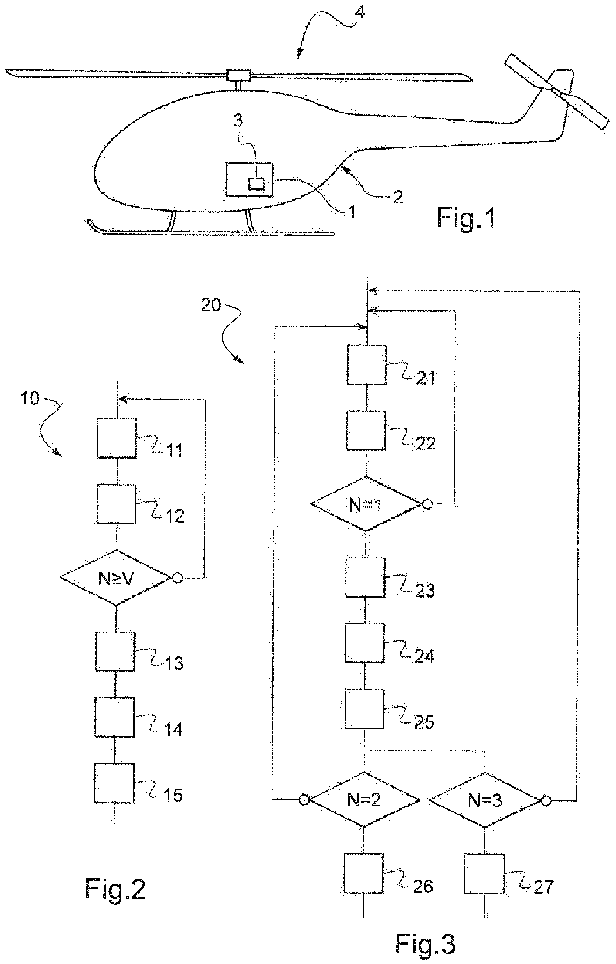

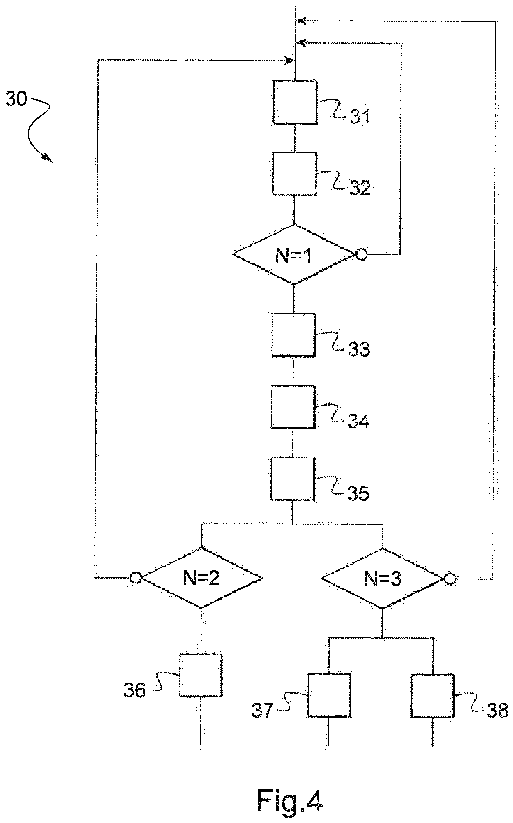

Comme déjà évoqué l'invention se rapporte aux procédés de gestion d'un système de pilotage automatique équipant un aéronef comme décrit en relation avec les figure 3 et 4. Le procédé décrit en relation avec la figure 2 ne fait pas partie de l'invention.

Tel que représenté à la figure 1, un aéronef 2 peut en effet comporter un système de pilotage automatique 1 comportant au moins un calculateur 3 permettant de générer automatiquement des consignes de commande pour piloter par exemple un rotor principal 4 de l'aéronef 2. Par exemple, un tel système de pilotage automatique 1 est particulièrement utile et avantageux pour permettre de réduire, au moins temporairement, la charge de travail d'un pilote.

En outre, un tel calculateur 3 peut comprendre par exemple un processeur, un circuit intégré, un système programmable, un circuit logique, ces exemples ne limitant pas la portée donnée à l'expression « calculateur » dont la fonction est d'effectuer une succession d'étapes et de répéter ces successions d'étapes sur plusieurs cycles.

Ainsi, un tel calculateur 3 est configuré pour mettre en œuvre une pluralité de succession d'étapes générant différentes consignes de pilotage automatique de l'aéronef 2.

Tel que représenté aux figures 2 à 4 selon une première variante, une deuxième variante et une troisième variante, un tel procédé de gestion 10, 20, 30 d'un système de pilotage automatique 1 comporte au moins une étape d'identification 11, 21, 31 permettant d'identifier la (ou les) erreur(s) lorsqu'elle(s) se produi(sen)t. En outre, une telle étape d'identification 11, 21, 31 permet de réaliser l'identification d'au moins une occurrence de la (ou des) erreur(s) sur une plage de temps prédéterminée d'utilisation de l'aéronef 2.

Par exemple, de telles erreurs peuvent être de type SEU et être générées de manière exceptionnelle par un champ magnétique extérieur, par des ondes électromagnétiques ou par des particules ionisantes venant perturber le fonctionnement d'un organe électronique. Un tel organe électronique dont le fonctionnement est perturbé peut notamment être formé par un microprocesseur, une mémoire de type semi-conducteur ou encore des transistors de puissance.

Un tel procédé 10, 20, 30 comporte ensuite une étape de calcul 12, 22, 32 pour déterminer un nombre total d'occurrences N de la (ou des) erreur(s) sur la plage de temps prédéterminée d'utilisation de l'aéronef 2.

Si le nombre total d'occurrences N de la (ou des) erreur(s) est supérieur ou égal à une valeur de seuil prédéterminée V, le procédé de gestion 10, 20, 30 comporte alors une étape d'arrêt 13, 23, 33 permettant d'arrêter la (ou les) succession(s) d'étapes sur un premier cycle d'étapes considéré comme défaillant.

Dans ce cas, un tel procédé de gestion 10, 20, 30 comporte alors une étape de réinitialisation 14, 24, 34 pour réinitialiser la (ou les) succession(s) d'étapes.

Le procédé de gestion 10, 20, 30 comporte enfin une étape de relance 15, 25, 35 permettant de relancer la (ou les) succession(s) d'étapes à partir d'un deuxième cycle d'étapes considéré comme sain. En outre, un tel deuxième cycle d'étapes est distinct du premier cycle d'étapes.

Cependant en fonction du nombre total d'occurrences N de la (ou des) erreur(s), la deuxième variante et la troisième variante du procédé de gestion 20, 30 telles qu'illustrées aux figures 3 et 4 peuvent comporter des étapes supplémentaires de sanctions visant à garantir un niveau de sécurité maximal de l'aéronef 2.

Ainsi par exemple, la valeur de seuil prédéterminée V peut être choisie égale au chiffre 1. Dans ce cas, dès la première d'occurrence d'une erreur, l'étape d'arrêt 23, 33, l'étape de réinitialisation 24, 34 et l'étape de relance 25, 35 sont mises en œuvre par le procédé de gestion 20, 30.

De plus, lorsque le nombre total d'occurrences N de la (ou des) erreur(s) atteint la valeur 2, la deuxième variante et la troisième variante du procédé de gestion 20, 30 comportent alors une première étape de sanction 26, 36 permettant d'inhiber un appel d'au moins une première succession d'étapes de l'un au moins des premier et deuxième cycles d'étapes.

Si le nombre total d'occurrences N de la (ou des) erreur(s) atteint la valeur 3, la deuxième variante et la troisième variante du procédé 20, 30 comportent alors une deuxième étape de sanction 27, 37 distincte de la première étape de sanction 26, 36. Une telle deuxième étape de sanction 27, 37 permet d'inhiber un appel d'au moins une deuxième succession d'étapes de l'un au moins desdits premier et deuxième cycles d'étapes. Par ailleurs, cette deuxième succession d'étapes est distincte de la première succession d'étapes.

En outre tel que représenté à la figure 4, lorsque le nombre total d'occurrences N de la (ou des) erreur(s) atteint la valeur 3, la troisième variante du procédé de gestion 30 peut également comporter une troisième étape de sanction 38 distincte des première et deuxième étapes de sanction 36 et 37. Une telle troisième étape de sanction 38 permet alors par exemple d'inhiber un appel d'au moins une routine élémentaire d'au moins une troisième succession d'étapes permettant de générer au moins une consigne de pilotage automatique de l'aéronef 2.

Telle que représenté à la figure 4, une telle troisième étape de sanction 38 peut être réalisée simultanément en parallèle de la deuxième étape de sanction 37. Cependant selon d'autres variantes de procédé de gestion non représentées, une telle troisième étape de sanction 38 peut également s'opérer à la place de la deuxième étape de sanction 37 ou encore lorsque le nombre total d'occurrences N de la (ou des) erreur(s) atteint une valeur prédéterminée supérieure à 3.

## Revendications

1. Procédé de gestion (10, 20, 30) d'un système de pilotage automatique (1) équipant un aéronef (2), ledit système de pilotage automatique (1) comportant au moins un calculateur (3) permettant de mettre en œuvre une pluralité de succession d'étapes générant différentes consignes de pilotage automatique dudit aéronef (2), ledit procédé de gestion (10, 20, 30) étant adapté pour gérer au moins une erreur dans au moins une succession d'étapes permettant de générer au moins une consigne de pilotage automatique dudit aéronef (2),
**caractérisé en ce que** ledit procédé (10, 20, 30) comporte au moins :
• une étape d'identification (11, 21, 31) permettant d'identifier ladite au moins une erreur dans ladite au moins une succession d'étapes mises en œuvre par ledit au moins un calculateur (3), ladite au moins une erreur étant une erreur exceptionnelle de type SEU due à un champ magnétique extérieur, à des ondes électromagnétiques ou à des particules ionisantes venant perturber le fonctionnement dudit au moins un calculateur (3), ladite étape d'identification (11, 21, 31) permettant d'identifier au moins une occurrence de ladite au moins une erreur sur une plage de temps prédéterminée d'utilisation dudit aéronef (2),
• une étape de calcul (12, 22, 32) pour déterminer un nombre total d'occurrences (N) de ladite au moins une erreur sur ladite plage de temps prédéterminée d'utilisation dudit aéronef (2),
• une étape d'arrêt (13, 23, 33) permettant d'arrêter ladite au moins une succession d'étapes sur un premier cycle d'étapes considéré comme défaillant lorsque ledit nombre total d'occurrences (N) de ladite au moins une erreur dans ladite au moins une succession d'étapes est supérieur ou égal à une valeur de seuil prédéterminée (V),
• une étape de réinitialisation (14, 24, 34) pour réinitialiser ladite au moins une succession d'étapes,
• une étape de relance (15, 25, 35) permettant de relancer ladite au moins une succession d'étapes à partir d'un deuxième cycle d'étapes considéré comme sain, ledit deuxième cycle d'étapes étant distinct dudit premier cycle d'étapes,
• une première étape de sanction (26, 36) pour inhiber un appel d'au moins une première succession d'étapes de l'un au moins desdits premier et deuxième cycles d'étapes lorsque ledit nombre total d'occurrences (N) de ladite au moins une erreur est supérieur ou égal au chiffre 1, et
• une deuxième étape de sanction (27, 37) distincte de ladite première étape de sanction (26, 36), ladite deuxième étape de sanction (27, 37) permettant d'inhiber un appel d'au moins une deuxième succession d'étapes de l'un au moins desdits premier et deuxième cycles d'étapes lorsque ledit nombre total d'occurrences (N) de ladite au moins une erreur est supérieur ou égal au chiffre 2, ladite au moins une deuxième succession d'étapes étant distincte de ladite au moins une première succession d'étapes.

2. Procédé selon la revendication 1,
**caractérisé en ce que** ladite valeur de seuil prédéterminée (V) est choisie supérieure ou égale au chiffre 1.

3. Procédé selon l'une quelconque des revendications 1 à 2,
**caractérisé en ce que** ledit procédé (30) comporte une troisième étape de sanction (38) distincte desdites première et deuxième étapes de sanction (36) et (37), ladite troisième étape de sanction (38) permettant d'inhiber un appel d'au moins une routine élémentaire d'au moins une troisième succession d'étapes permettant de générer au moins une consigne de pilotage automatique dudit aéronef (2).

4. Procédé selon la revendication 3,
**caractérisé en ce que** ladite troisième étape de sanction (38) s'opère lorsque ledit nombre total d'occurrences de ladite au moins une erreur est supérieur ou égal au chiffre 2 et préférentiellement lorsque ledit nombre total d'occurrences est égal au chiffre 3.

## Patentansprüche

1. Verwaltungsverfahren (10, 20, 30) für ein in einem Luftfahrzeug (2) eingebautes Autopilotsystem (1), wobei das Autopilotsystem (1) mindestens einen Rechner (3) umfasst, der es ermöglicht, eine Mehrzahl von Schrittfolgen zur Erzeugung verschiedener Autopilotbefehle für das Luftfahrzeug (2) durchzuführen,
wobei das Verwaltungsverfahren (10, 20, 30) geeignet ist, mindestens einen Fehler in mindestens einer Schrittfolge zu handhaben, die es ermöglicht, mindestens einen Autopilotbefehl für das Luftfahrzeug (2) zu erzeugen,
**dadurch gekennzeichnet, dass** das Verfahren (10, 20, 30) mindestens umfasst:
• einen Identifizierungsschritt (11, 21, 31), der es ermöglicht, den mindestens einen Fehler in der mindestens einen von dem mindestens einen Rechner (3) ausgeführten Schrittfolge zu identifizieren, wobei der mindestens eine Fehler ein außergewöhnlicher Fehler vom Typ SEU ist, der auf ein äußeres Magnetfeld, auf elektromagnetische Wellen oder auf ionisierende Teilchen zurückzuführen ist, die den Betrieb des mindestens einen Rechners (3) stören, wobei der Identifizierungsschritt (11, 21, 31) es ermöglicht, mindestens ein Auftreten des mindestens einen Fehlers über einen vorgegebenen Zeitbereich der Verwendung des Luftfahrzeugs (2) zu identifizieren,
• einen Berechnungsschritt (12, 22, 32) zum Bestimmen einer Gesamtzahl des Auftretens (N) des mindestens einen Fehlers über den vorgegebenen Zeitbereich der Verwendung des Luftfahrzeugs (2),
• einen Anhalteschritt (13, 23, 33), der es ermöglicht, die mindestens eine Schrittfolge in einem ersten Schrittzyklus anzuhalten, der als fehlerhaft angesehen wird, wenn die Gesamtzahl des Auftretens (N) des mindestens einen Fehlers in der mindestens einen Schrittfolge größer als oder gleich einem vorgegebenen Schwellenwert (V) ist,
• einen Reinitialisierungsschritt (14, 24, 34) zum Reinitialisieren der mindestens einen Schrittfolge,
• einen Neustartschritt (15, 25, 35), der es ermöglicht, die mindestens eine Schrittfolge von einem als gesund angesehenen zweiten Schrittzyklus aus neu zu starten, wobei der zweite Schrittzyklus von dem ersten Schrittzyklus verschieden ist,
• einen ersten Sanktionierungsschritt (26, 36) zum Sperren eines Aufrufs von mindestens einer ersten Schrittfolge vom ersten und/oder zweiten Schrittzyklus aus, wenn die Gesamtzahl des Auftretens (N) des mindestens einen Fehlers größer als oder gleich der Zahl 1 ist, und
• einen zweiten Sanktionierungsschritt (27, 37), der sich von dem ersten Sanktionierungsschritt (26, 36) unterscheidet, wobei der zweite Sanktionierungsschritt (27, 37) es ermöglicht, einen Aufruf von mindestens einer zweiten Schrittfolge vom ersten und/oder zweiten Schrittzyklus aus zu sperren, wenn die Gesamtzahl des Auftretens (N) des mindestens einen Fehlers größer oder gleich der Zahl 2 ist, wobei die mindestens eine zweite Schrittfolge sich von der mindestens einen ersten Schrittfolge unterscheidet.

2. Verfahren nach Anspruch 1,
**dadurch gekennzeichnet, dass** der vorgegebene Schwellenwert (V) größer als oder gleich der Zahl 1 gewählt wird.

3. Verfahren nach einem der Ansprüche 1 bis 2,
**dadurch gekennzeichnet, dass** das Verfahren (30) einen dritten Sanktionierungsschritt (38) umfasst, der sich von dem ersten und dem zweiten Sanktionierungsschritt (36) und (37) unterscheidet, wobei der dritte Sanktionierungsschritt (38) es ermöglicht, einen Aufruf mindestens einer elementaren Routine mindestens einer dritten Schrittfolge zu sperren, die es ermöglicht, mindestens einen Autopilotbefehl für das Luftfahrzeug (2) zu erzeugen.

4. Verfahren nach Anspruch 3,
**dadurch gekennzeichnet, dass** der dritte Sanktionierungsschritt (38) durchgeführt wird, wenn die Gesamtzahl des Auftretens des mindestens einen Fehlers größer oder gleich der Zahl 2 ist und vorzugsweise wenn die Gesamtzahl des Auftretens gleich der Zahl 3 ist.

## Claims

1. Method (10, 20, 30) for managing an automatic piloting system (1) provided on an aircraft (2), said automatic piloting system (1) comprising at least one computer (3) which enables the implementation of a plurality of sequences of steps which generate different automatic piloting instructions of said aircraft (2), said management method (10, 20, 30) being suitable for managing at least one error in at least one sequence of steps which enable the generation of at least one automatic piloting instruction of said aircraft (2),
**characterized in that** said method (10, 20, 30) comprises at least:
• an identification step (11, 21, 31) enabling the identification of said at least one error in said at least one sequence of steps implemented by said at least one computer (3), said at least one error being an exceptional SEU-type error due to an external magnetic field, electromagnetic waves or ionising particles disturbing the operation of said at least one computer (3), said identification step (11, 21, 31) enabling the identification of at least one occurrence of said at least one error over a predetermined period of use of said aircraft (2),
• a calculation step (12, 22, 32) for determining a total number of occurrences (N) of said at least one error over said predetermined period of use of said aircraft (2),
• a stopping step (13, 23, 33) which enables said at least one sequence of steps to be stopped in a first cycle of steps that is considered to be faulty when said total number of occurrences (N) of said at least one error in said at least one sequence of steps is greater than or equal to a predetermined threshold value (V),
• a reinitialisation step (14, 24, 34) for reinitialising said at least one sequence of steps,
• a restart step (15, 25, 35) which enables the restart of said at least one sequence of steps from a second cycle of steps considered to be sound, said second cycle of steps being separate from said first cycle of steps,
• a first sanctioning step (26, 36) for inhibiting a call for at least one first sequence of steps of at least one of said first and second cycles of steps when said total number of occurrences (N) of said at least one error is greater than or equal to the number 1, and
• a second sanctioning step (27, 37) which is separate from said first sanctioning step (26, 36), said second sanctioning step (27, 37) enabling the inhibition of a call for at least one second sequence of steps of at least one of said first and second cycles of steps when said total number of occurrences (N) of said at least one error is greater than or equal to the number 2, said at least one second sequence of steps being separate from said at least one first sequence of steps.

2. Method according to claim 1,
**characterized in that** said predetermined threshold value (V) is selected to be greater than or equal to the number 1.

3. Method according to either claim 1 or claim 2,
**characterized in that** said method (30) comprises a third sanctioning step (38) which is separate from said first and second sanctioning steps (36) and (37), said third sanctioning step (38) enabling the inhibition of a call for at least one elementary routine of at least one third sequence of steps which enables the generation of at least one automatic piloting instruction of said aircraft (2).

4. Method according to claim 3,
**characterized in that** said third sanctioning step (38) takes place when said total number of occurrences of said at least one error is greater than or equal to the number 2 and preferably when said total number of occurrences is equal to the number 3.
